# EUROPEAN PATENT APPLICATION

(11) **EP 3 871 935 A1**
(43) Date of publication of application: **01.09.2021**
(21) Application number: 19875400.4
(22) Date of filing: 28.06.2019
(51) Int. Cl.: B60W 30/06, G08G 1/16, H04N 7/18

(54) **PARKING SPACE DETECTION METHOD AND APPARATUS**

(30) Priority: 25.10.2018 CN 201811256532
(71) Applicant: Guangzhou Xiaopeng Motors Technology Co., Ltd., Guangzhou, Guangdong 510000 (CN)
(72) Inventor: XIAO, Zhiguang, Guangzhou, Guangdong 510000 (CN); LAI, Jianming, Guangzhou, Guangdong 510000 (CN); CHEN, Shengjun, Guangzhou, Guangdong 510000 (CN); JIANG, Shaofeng, Guangzhou, Guangdong 510000 (CN); ZHANG, Xuefei, Guangzhou, Guangdong 510000 (CN)
(74) Representative: DREISS Patentanwälte PartG mbB
(86) International application number: PCT/CN2019/093434
(87) International publication number: WO 2020/082777

(57) **Abstract**

A parking space detection method and apparatus are provided. The method includes: detecting a reachable region matching a vehicle in an environment in which the vehicle is located; identifying one or more parking spaces in the reachable region, and determining a usable parking space from the one or more parking spaces; and obtaining usable parking position information of the usable parking space, and storing the usable parking position information, so as to avoid repeated detection of the usable parking space.

## Description

### TECHNICAL FIELD

The present disclosure relates to the field of vehicle technology, and more particularly, to a parking space detection method and apparatus.

### BACKGROUND

Currently, for automatic parking of an autonomous vehicle, it is required to detect parking spaces around the autonomous vehicle first. The automatic parking of the autonomous vehicle is possible only when a usable parking space is detected. However, it has been found in practice that conventional methods for parking space detection can typically detect only one usable parking space around the autonomous vehicle. When the vehicle is moving fast, the usable parking space may be missed. If the driver wants to park the vehicle in the usable parking space later, he/she needs to drive the autonomous vehicle to the vicinity of the usable parking space, so as to detect the usable parking space again. It can be seen that if the driver wants to determine the missed usable parking space as the parking space to park during the parking process, the usable parking space needs to be detected again, such that the autonomous vehicle cannot quickly determine information on the usable parking space, which reduces the efficiency of automatic parking.

### SUMMARY

The embodiments of the present disclosure provide a parking space detection method and apparatus, capable of improving the efficiency of automatic parking.

According to a first aspect of the embodiments of the present disclosure, a parking space detection method is provided. The method includes: detecting a reachable region matching a vehicle in an environment in which the vehicle is located; identifying one or more parking spaces in the reachable region, and determining a usable parking space from the one or more parking spaces; and obtaining usable parking position information of the usable parking space, and storing the usable parking position information.

As an optional embodiment, in the first aspect of the embodiments of the present disclosure, the method may further include: obtaining current images of the environment in which the vehicle is located using an image capturing device; combining the current images using an augmented reality technology to generate a current scene image of the environment in which the vehicle is located; and outputting the current scene image via a display device. The method may further include, subsequent to obtaining the usable parking position information of the usable parking space and storing the usable parking position information: identifying a first position of the reachable region in the current scene image, and obtaining a second position corresponding to the usable parking position information in the current scene image; and outputting a first reachable region image at the first position in the current scene image, and outputting a parking space image at the second position in the current scene image, via the display device.

As an optional embodiment, in the first aspect of the embodiments of the present disclosure, the operation of detecting the reachable region matching the vehicle in the environment in which the vehicle is located may include: obtaining, in response to detecting a parking instruction, an occupied area of the vehicle, and detecting position information of one or more obstacles in the environment in which the vehicle is located; generating a target region based on the position information of the one or more obstacles; and identifying, from the target region, the reachable region with an area larger than the occupied area.

As an optional embodiment, in the first aspect of the embodiments of the present disclosure, the operation of identifying the one or more parking spaces in the reachable region and determining the usable parking space from the one or more parking spaces may include: identifying the one or more parking spaces in the reachable region, and determining an accessible region around each of the one or more parking spaces; and determining, from the one or more parking spaces, the usable parking space having the accessible region that meets a parking criterion of the vehicle.

As an optional embodiment, in the first aspect of the embodiments of the present disclosure, the method may further include, subsequent to detecting the reachable region matching the vehicle in the environment in which the vehicle is located: obtaining a second reachable region image containing the reachable region using an image capturing device; detecting whether pre-stored usable parking position information contains a usable parking space image matching the second reachable region image using an image identification technology; and if not, performing said identifying of the one or more parking spaces in the reachable region and said determining of the usable parking space from the one or more parking spaces.

In a second aspect of the embodiments of the present disclosure, a parking space detection apparatus is provided. The apparatus includes: a first detecting unit configured to detect a reachable region matching a vehicle in an environment in which the vehicle is located; a first identifying unit configured to identify one or more parking spaces in the reachable region and determine a usable parking space from the one or more parking spaces; and a storage unit configured to obtain usable parking position information of the usable parking space and store the usable parking position information.

As an optional embodiment, in the second aspect of the embodiments of the present disclosure, the apparatus may further include: a first obtaining unit configured to obtain current images of the environment in which the vehicle is located using an image capturing device; a generating unit configured to combine the current images using an augmented reality technology to generate a current scene image of the environment in which the vehicle is located; and a first output unit configured to output the current scene image via a display device. The apparatus may further include: a second identifying unit configured to identify a first position of the reachable region in the current scene image, and obtain a second position corresponding to the usable parking position information in the current scene image, after the storage unit obtains the usable parking position information of the usable parking space and stores the usable parking position information; and a second output unit configured to output a first reachable region image at the first position in the current scene image, and output a parking space image at the second position in the current scene image, via the display device.

As an optional embodiment, in the second aspect of the embodiments of the present disclosure, the first detecting unit may include: a detecting subunit configured to obtain, in response to detecting a parking instruction, an occupied area of the vehicle, and detect position information of one or more obstacles in the environment in which the vehicle is located; a generating subunit configured to generate a target region based on the position information of the one or more obstacles; and a first identifying subunit configured to identify, from the target region, the reachable region with an area larger than the occupied area.

As an optional embodiment, in the second aspect of the embodiments of the present disclosure, the first identifying unit may include: a second identifying subunit configured to identify the one or more parking spaces in the reachable region and determine an accessible region around each of the one or more parking spaces; and a determining subunit configured to determine, from the one or more parking spaces, the usable parking space having the accessible region that meets a parking criterion of the vehicle.

As an optional embodiment, in the second aspect of the embodiments of the present disclosure, the apparatus may further include: a second obtaining unit configured to obtain a second reachable region image containing the reachable region using an image capturing device, after the first detecting unit detects the reachable region matching the vehicle in the environment in which the vehicle is located; and a second detecting unit configured to detect whether pre-stored usable parking position information contains a usable parking space image matching the second reachable region image using an image identification technology. The first identifying unit is further configured to identify the one or more parking spaces in the reachable region and determine the usable parking space from the one or more parking spaces when the second detecting unit detects that the pre-stored usable parking position information contains no usable parking space image matching the second reachable region image.

In a third aspect of the embodiments of the present disclosure, a vehicle mounted electronic device is provided. The vehicle mounted electronic device includes: a memory storing executable program codes; and a processor coupled to the memory. The processor is configured to invoke the executable program codes stored in the memory to perform a part or all of the steps in any of the methods according to the first aspect.

In a fourth aspect of the embodiments of the present disclosure, a computer readable storage medium is provided. The computer readable storage medium stores program codes including instructions for performing a part or all of the steps in any of the methods according to the first aspect.

In a fifth aspect of the embodiments of the present disclosure, a computer program product is provided. The computer program product, when executed on a computer, causes the computer to perform a part or all of the steps in any of the methods according to the first aspect.

In a sixth aspect of the embodiments of the present disclosure, an application publishing platform is provided. The application publishing platform is configured to publish a computer program product which, when executed on a computer, causes the computer to perform a part or all of the steps in any of the methods according to the first aspect.

Compared with the related art, the embodiments of the present disclosure have the following advantageous effects.

In the embodiments of the present disclosure, a reachable region matching a vehicle in an environment in which the vehicle is located can be detected. One or more parking spaces can be identified in the reachable region, and a usable parking space can be determined from the one or more parking spaces. Usable parking position information of the usable parking space can be obtained and stored, so as to avoid repeated detection of the usable parking space. It can be seen that, with the embodiments of the present disclosure, one or more usable parking spaces can be determined from the detected parking spaces in the reachable region, and the position information of the determined usable parking space(s) can be stored. When a driver wants to park the vehicle at a missed usable parking space, the information of the parking space can be directly obtained, without the need for repeated detection of the parking space. In this way, the time required for identifying the parking space can be saved, thereby improving the efficiency of automatic parking.

### BRIEF DESCRIPTION OF DRAWINGS

In order to describe the solutions according to the embodiments of the present disclosure more clearly, the figures used in the embodiments will be introduced briefly below. It is apparent to those skilled in the art that the figures described below only illustrate some embodiments of the present disclosure and other figures can be obtained from these figures without applying any inventive skills. In the figures:
FIG. 1 is a flowchart illustrating a parking space detection method according to an embodiment of the present disclosure;
FIG. 2 is a flowchart illustrating another parking space detection method according to an embodiment of the present disclosure;
FIG. 3 is a flowchart illustrating yet another parking space detection method according to an embodiment of the present disclosure;
FIG. 4 is a schematic diagram showing a structure of a parking space detection apparatus according to an embodiment of the present disclosure;
FIG. 5 is a schematic diagram showing a structure of another parking space detection apparatus according to an embodiment of the present disclosure;
FIG. 6 is a schematic diagram showing a structure of yet another parking space detection apparatus according to an embodiment of the present disclosure; and
FIG. 7 is a schematic diagram showing a structure of a vehicle mounted electronic device according to an embodiment of the present disclosure.

### DESCRIPTION OF EMBODIMENTS

In the following, the solutions according to the embodiments of the present disclosure will be described clearly and completely with reference to the figures. Obviously, the embodiments described below are only some, rather than all, of the embodiments of the present disclosure. All other embodiments that can be obtained by those skilled in the art based on the embodiments described in the present disclosure without any inventive efforts are to be encompassed by the scope of the present disclosure.

It is to be noted that the terms "including" and "having", and any variants thereof, as used in the embodiments and figures of the present disclosure are intended to cover non-exclusive inclusions. For example, a process, method, system, product, or device that is described as including a series of steps or units is not limited to the described steps or units, but may optionally include one or more steps or units that are not described, or may optionally further include other steps or units that are inherent to the process, method, product, or device.

The embodiments of the disclosure provide a method and an apparatus for a parking space detection, capable of improving the efficiency of automatic parking. Detailed descriptions will be given below.

### Embodiment 1

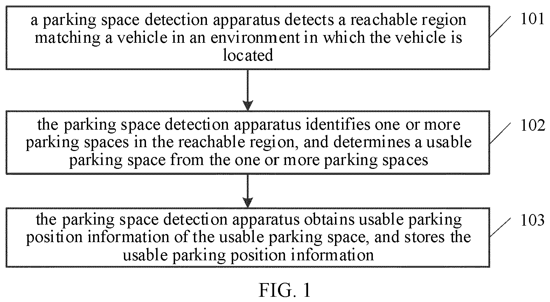

Reference is now made to FIG. 1, which is a flowchart illustrating a parking space detection method according to an embodiment of the present disclosure. As shown in FIG. 1, the parking space detection method may include the following steps:

At 101, a parking space detection apparatus detects a reachable region matching a vehicle in an environment in which the vehicle is located.

In an embodiment of the present disclosure, the parking space detection apparatus may be an electronic device such as a vehicle mounted computer provided in the vehicle. The vehicle mounted electronic device can be installed on any vehicle. A driver can control a number of devices on the vehicle using the vehicle mounted electronic device. For example, the vehicle mounted electronic device can control a vehicle mounted ultrasonic sensor to detect obstacles around the vehicle, control a vehicle mounted display to output/display images, and control a vehicle mounted camera to capture scene images at any angles around the vehicle.

In an embodiment of the present disclosure, the parking space detection apparatus can control sensors such as a radar sensor or an ultrasonic sensor to detect obstacles in the environment in which the vehicle is located, as well as boundaries of obstacles, and determine a region where there are no obstacles in the environment in which the vehicle is located based on the detected obstacles and their boundaries, and determine the region where there are no obstacles as the reachable region matching the vehicle.

At 102, the parking space detection apparatus identifies one or more parking spaces in the reachable region, and determines a usable parking space from the one or more parking spaces.

In an embodiment of the present disclosure, the driver may choose to park the vehicle in a parking lot, or can choose to park the vehicle at any place. When the driver chooses to park the vehicle in a parking lot, the reachable region detected by the parking space detection apparatus provided in the vehicle may include planned parking spaces in the parking lot. Typically, the planned parking spaces in the parking lot will be indicated by parking space marking lines. Therefore, the parking space detection apparatus can detect the parking spaces existing in the reachable region by detecting the parking space marking lines in the reachable region. The parking space detection apparatus may identify one or more parking spaces, or no parking space, from the reachable region, and the embodiment of the present disclosure is not limited to any of these examples. When the driver chooses to park the vehicle at any place, the parking space detection apparatus provided in the vehicle can first detect whether there are parking space marking lines. If so, it can identify one or more parking spaces in the reachable region based on the parking space marking lines; or otherwise it can identify a region in the reachable region that has an area meeting a parking requirement of the current vehicle as a parking space, so as to identify the parking space(s) in the reachable region successfully.

In an embodiment of the present disclosure, as there may be some parking spaces that are unusable in the identified parking spaces, the parking space detection apparatus needs to perform further detection and identification on the identified parking spaces. For example, there may be a parking space having an area meeting the requirement of the current vehicle, but no path can be found in the region around the parking space for the current vehicle to park in the parking space, so such parking space can be determined as an unusable parking space. In addition, the parking space detection apparatus may or may not identify one or more usable parking spaces from a number of parking spaces, and the embodiment of the present disclosure is not limited to any of these examples.

As an optional implementation, the parking space detection apparatus can identify the one or more parking spaces in the reachable region according to the following steps.

The parking space detection apparatus identifies whether there is a parking space marking line in the reachable region.

If so, the parking space detection apparatus determines a scope of the parking space marking line, and determines the scope of the parking space marking line as the parking space.

Otherwise, the parking space detection apparatus obtains a standard area and a standard shape of the parking space, and determines whether the area of the reachable region is greater than the standard area, and if so, the parking space detection apparatus divides the reachable region into a number of parking spaces based on the standard shape.

With this implementation, the obtained parking space can be a standard parking space, so as to ensure that the obtained parking space can be used for parking the vehicle.

As an optional implementation, the parking space detection apparatus can determine the usable parking space from the one or more parking spaces according to the following steps.

The parking space detection apparatus detects whether there is a No Parking sign around the parking space.

If there is no No Parking sign, the parking space detection apparatus determines whether a road surface corresponding to the parking space meets a pre-stored parking criterion.

If the road surface meets the pre-stored parking criterion, the parking space detection apparatus detects whether a height corresponding to the parking space meets a standard height.

If the height meets the standard height, the parking space detection apparatus generates a route from a current position of the vehicle to the parking space, and determines whether the route is feasible.

If the route is feasible, the parking space detection apparatus determines the parking space as the usable parking space.

With this implementation, it is possible to detect whether the identified parking space meets a parking criterion of the current vehicle with respect to No Parking sign, the road surface and height of the parking space, the route from the current position of the vehicle to the parking space and the like. The parking space among the identified parking spaces that meets the parking criterion of the current vehicle can be determined as the usable parking space, so as to ensure that the identified usable parking space can be used for parking the current vehicle.

At 103, the parking space detection apparatus obtains usable parking position information of the usable parking space, and stores the usable parking position information, so as to avoid repeated detection of the usable parking space.

In the embodiment of the present disclosure, the parking space detection apparatus may have an electronic map of the region where the vehicle is located or a parking lot map of a parking lot where the vehicle is currently located. When the parking space detection apparatus identifies the usable parking space, it can obtain a specific position of the usable parking space in the electronic map of the region where the vehicle is located or in the parking lot map. The usable parking position information can be embodied in a form of coordinates. For example, the shape of the parking space is typically a rectangle. Therefore, the coordinates corresponding to four vertices of the rectangle corresponding to the parking space in the electronic map of the region where the vehicle is located or in the parking lot map can be determined and stored as the usable parking position information of the usable parking space, such that the parking space detection apparatus does not need to detect the detected reachable region again, and does not need to repeatedly detect the usable parking space.

As an optional implementation, the parking space detection apparatus can obtain the usable parking position information of the usable parking space and store the usable parking position information according to the following steps.

The parking space detection apparatus detects whether an electronic map is pre-stored.

If so, the parking space detection apparatus calculates a group of position coordinates of the usable parking space in the electronic map, and stores the group of position coordinates as the usable parking position information of the usable parking space, so as to avoid repeated detection of the usable parking space.

Otherwise, the parking space detection apparatus obtains a group of latitude and longitude coordinates of the parking space, and stores the group of latitude and longitude coordinates as the parking position information of the parking space, so as to avoid repeated detection of the parking space.

With this implementation, if the parking space detection apparatus does not have a pre-stored electronic map, a group of longitude and latitude coordinates of the parking space can be determined by using a Satellite Positioning technology, so as to determine the exact position information of the usable parking space. In addition, a variety of storage schemes for storing the usable parking position information of the usable parking space can be provided, so as to ensure that the parking space detection apparatus can accurately store the detected usable parking space.

In the method described in FIG. 1, there is no need to repeatedly detect a missed usable parking space in which the vehicle was to be parked, which saves the time required for identifying the usable parking space and improves the efficiency of automatic parking. In addition, with the method described in FIG. 1, the obtained parking space can be a standard parking space, so as to ensure that the obtained parking space can be used for parking the vehicle. In addition, with the method described in FIG. 1, the parking space among the identified parking spaces that meets the parking criterion of the current vehicle can be determined as the usable parking space, so as to ensure that the identified usable parking space can be used for parking the current vehicle. In addition, with the method described in FIG. 1, a variety of storage schemes for storing the usable parking position information of the usable parking space can be provided, so as to ensure that the parking space detection apparatus can accurately store the detected usable parking space.

### Embodiment 2

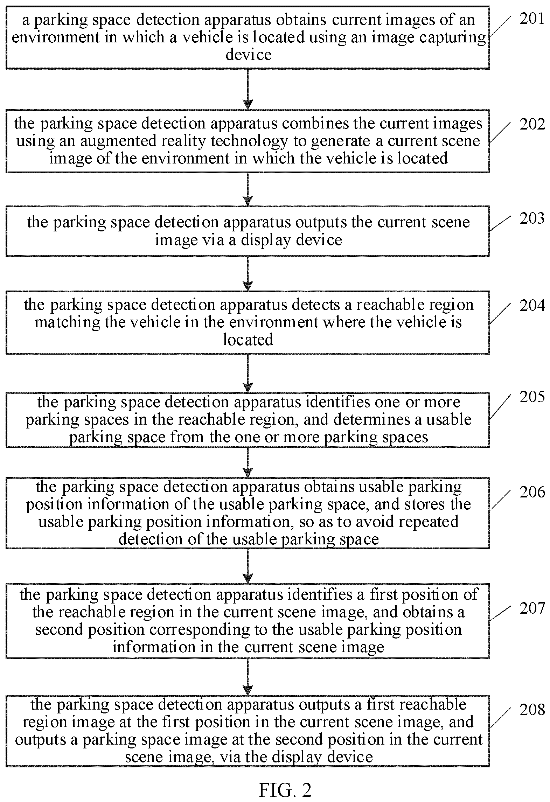

Reference is now made to FIG. 2, which is a flowchart illustrating another parking space detection method according to an embodiment of the present disclosure. As shown in FIG. 2, the parking space detection method may include the following steps.

At 201, a parking space detection apparatus obtains current images of an environment in which a vehicle is located using an image capturing device.

In an embodiment of the present disclosure, the image capturing device may be a device such as a vehicle mounted camera, and the image capturing device may capture current images (such as pictures or videos) of the surrounding environment of the vehicle while the vehicle is moving.

At 202, the parking space detection apparatus combines the current images using an augmented reality technology to generate a current scene image of the environment in which the vehicle is located.

In an embodiment of the present disclosure, the parking space detection apparatus may use an Augmented Reality (AR) technology to combine the obtained current images to generate the current scene image suitable for AR, and output the current scene image via a vehicle mounted display, such that the driver and passengers can see the environment in which the vehicle is located via the vehicle mounted display, without having to get off the vehicle to observe the specific environment around the vehicle.

At 203, the parking space detection apparatus outputs the current scene image via a display device.

In an embodiment of the present disclosure, with the above steps 201 to 203, the environment image around the vehicle can be captured by the image capturing device, and the captured environment images can be combined to generate a comprehensive current scene image. The current scene image can be outputted via the display device, such that the driver and passengers can have a clear understanding of the environment in which the vehicle is currently located.

Optionally, the step 201 to step 203 can be performed before or after any of step 204 to step 207, without any substantial impact on the present disclosure.

At 204, the parking space detection apparatus detects a reachable region matching the vehicle in the environment where the vehicle is located.

As an optional implementation, the parking space detection apparatus can detect the reachable region matching the vehicle in the environment in which the vehicle is located according to the following steps.

In response to detecting a parking instruction, the parking space detection apparatus obtains an occupied area of the vehicle, and detect position information of one or more obstacles in the environment in which the vehicle is located.

The parking space detection apparatus generates a target region based on the position information of the one or more obstacles.

The parking space detection apparatus identifies, from the target region, the reachable region with an area larger than the occupied area.

With this implementation, a region having an area larger than the area occupied by the current vehicle can be determined as the reachable region of the vehicle, and regions with areas smaller than the area occupied by the current vehicle can be excluded, so as to ensure that the detected reachable region can meet the parking requirement of the vehicle.

At 205, the parking space detection apparatus identifies one or more parking spaces in the reachable region, and determines a usable parking space from the one or more parking spaces.

At 206, the parking space detection apparatus obtains usable parking position information of the usable parking space, and stores the usable parking position information, so as to avoid repeated detection of the usable parking space.

At 207, the parking space detection apparatus identifies a first position of the reachable region in the current scene image, and obtains a second position corresponding to the usable parking position information in the current scene image.

In an embodiment of the present disclosure, the parking space detection apparatus can identify the position of the reachable region in the current scene image, and determine the position of the reachable region in the current scene image as the first position. The parking space detection apparatus can further identify the position corresponding to the usable parking position information in the current scene image, and determine the position corresponding to the usable parking position information in the current scene image as the second position. Since the reachable region includes the usable parking space, the region corresponding to the first position in the current scene image contains the region corresponding to the second position.

At 208, the parking space detection apparatus outputs a first reachable region image at the first position in the current scene image, and outputs a parking space image at the second position in the current scene image, via the display device.

In an embodiment of the present disclosure, the first reachable region image may be a scope of the reachable region represented by lines or shadows, and the parking space image may be a scope of the usable parking represented by lines or shadows. If the first reachable region image and the parking space image are both represented by lines, the lines corresponding to the first reachable region image and the lines corresponding to the parking space image may have different forms. If both the first reachable region image and the parking space image are represented by shadows, the shadow image layer corresponding to the first reachable region image may be beneath the shadow image corresponding to the parking space image, and the image corresponding to the current scene image may be at the bottom image layer. This outputting scheme allows displaying the reachable region on the current scene image, and displaying the position of the usable parking space on the reachable region, such that the driver and passengers can identify the usable parking space via the vehicle mounted display more intuitively.

In an embodiment of the present disclosure, with the above step 207 to step 208, the detected reachable region and the simulated image of the parking space can be outputted into the current scene image, such that the driver and passengers can clearly identify the specific position of the detected parking space and the surrounding environment of the parking space. In this way, the driver and passengers can select the parking space to park based on the parking spaces and the surrounding environment of the parking spaces comprehensively.

In the method described in FIG. 2, there is no need to repeatedly detect a missed usable parking space in which the vehicle was to be parked, which saves the time required for identifying the usable parking space and improves the efficiency of automatic parking. In addition, with the method described in FIG. 2, the current scene image can be outputted via the display device, such that the driver and passengers can have a clear understanding of the environment in which the vehicle is currently located. In addition, with the method described in FIG. 2, it can be ensured that the detected reachable region can meet the parking requirement of the vehicle. In addition, with the method described in FIG. 2, the driver and passengers can select the parking space to park based on the parking spaces and the surrounding environment of the parking spaces comprehensively.

### Embodiment 3

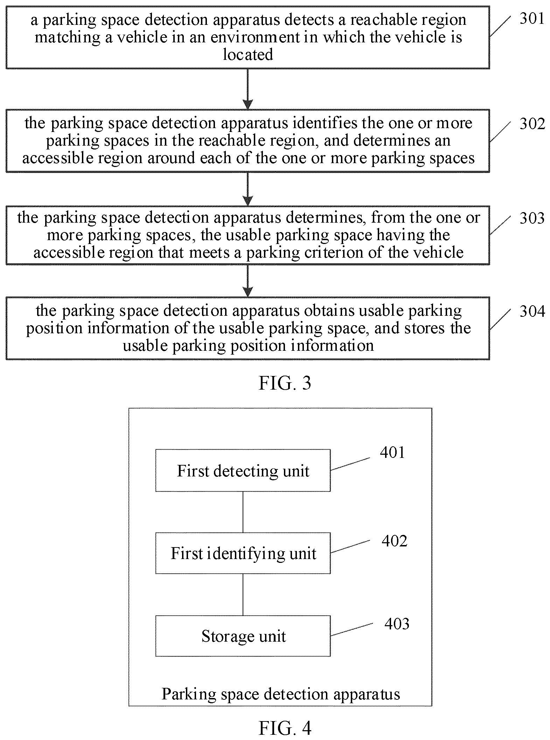

Reference is now made to FIG. 3, which is a flowchart illustrating another parking space detection method according to an embodiment of the present disclosure. As shown in FIG. 3, the parking space detection method may include the following steps.

At 301, a parking space detection apparatus detects a reachable region matching a vehicle in an environment in which the vehicle is located.

As an optional implementation, after the step 301, the parking space detection apparatus may further perform the following steps:
obtaining a second reachable region image containing the reachable region using an image capturing device;
detecting whether pre-stored usable parking position information contains a usable parking space image matching the second reachable region image using an image identification technology; and
if not, identifying one or more parking spaces in the reachable region and determining a usable parking space from the one or more parking spaces.

With this implementation, it can be detected whether the currently identified reachable region matches the position of the usable parking space pre-stored in the parking space detection apparatus. If so, it can be considered that the parking space detection apparatus has stored the information on the usable parking space in the reachable region. Therefore, the parking space detection apparatus does not need to detect the information on the usable parking space again, which simplifies the process of parking space detection and improves the efficiency of parking space detection.

At 302, the parking space detection apparatus identifies the one or more parking spaces in the reachable region, and determines an accessible region around each of the one or more parking spaces.

As an optional implementation, the parking space detection apparatus can identify the one or more parking spaces in the reachable region and determine the accessible region around each of the one or more parking spaces according to the following steps.

The parking space detection apparatus obtains a model of the vehicle.

The parking space detection apparatus obtains a length, a width, and a height of the vehicle based on the model of the vehicle.

The parking space detection apparatus obtains a target region corresponding to the length and width of the vehicle from the reachable region. The length of the target region is greater than or equal to the length of the vehicle, and the width of the target region is greater than or equal to the width of the vehicle.

The parking space detection apparatus detects whether a height from a ground in the target region to an obstacle opposite to the ground is greater than the height of the vehicle.

If so, the parking space detection apparatus determines the target region as a parking space, and determines an area around the parking space as an accessible region of the parking space.

With this implementation, it can be ensured that the dimensions of the detected parking spaces match the model of the current vehicle, so as to ensure that the identified parking spaces are suitable for parking the current vehicle, thereby increasing the probability that the vehicle can be parked in the identified parking spaces.

At 303, the parking space detection apparatus determines, from the one or more parking spaces, the usable parking space having the accessible region that meets a parking criterion of the vehicle.

In an embodiment of the present disclosure, the parking criterion of the vehicle may be a region that needs to be reserved around a specific parking space when the vehicle is to be parked in the specific parking space. The reserved region allows the vehicle to move to obtain the optimal path to park.

In an embodiment of the present disclosure, with the above step 302 to step 303, after obtaining the one or more parking spaces in the reachable region, it is possible to detect the usable parking space having the accessible region around the usable parking space that meets the parking criterion of the vehicle, such that the vehicle can be parked in the usable parking space by moving in the accessible region, thereby ensuring that the vehicle can be parked in the detected usable parking space.

At 304, the parking space detection apparatus obtains usable parking position information of the usable parking space, and stores the usable parking position information.

In the method described in FIG. 3, there is no need to repeatedly detect a missed usable parking space in which the vehicle was to be parked, which saves the time required for identifying the usable parking space and improves the efficiency of automatic parking. In addition, with the method described in FIG. 3, it can be ensured that the dimensions of the detected parking spaces match the model of the current vehicle, so as to ensure that the identified parking spaces are suitable for parking the current vehicle, thereby increasing the probability that the vehicle can be parked in the identified parking spaces. In addition, with the method described in FIG. 3, it can be ensured that the vehicle can be parked in the detected usable parking space. In addition, with the method described in FIG. 3, there is no need to detect the information on the usable parking space again, which simplifies the process of parking space detection and improves the efficiency of parking space detection.

### Embodiment 4

Reference is now made to FIG. 4, which is a schematic diagram showing a structure of a parking space detection apparatus according to an embodiment of the present disclosure. As shown in FIG, 4, the parking space detection apparatus may include the following units.

A first detecting unit 401 is configured to detect a reachable region matching a vehicle in an environment in which the vehicle is located.

A first identifying unit 402 is configured to identify one or more parking spaces in the reachable region and determine a usable parking space from the one or more parking spaces.

As an optional implementation, the first identifying unit 402 can identify the one or more parking spaces in the reachable region by:
identifying whether there is a parking space marking line in the reachable region;
if so, determining a scope of the parking space marking line, and determining the scope of the parking space marking line as the parking space; or
otherwise, obtaining a standard area and a standard shape of the parking space, and determining whether the area of the reachable region is greater than the standard area, and if so, dividing the reachable region into a number of parking spaces based on the standard shape.

With this implementation, the obtained parking space can be a standard parking space, so as to ensure that the obtained parking space can be used for parking the vehicle.

As an optional implementation, the first identifying unit 402 can determine the usable parking space from the one or more parking spaces by:
detecting whether there is a No Parking sign around the parking space;
if there is no No Parking sign, determining whether a road surface corresponding to the parking space meets a pre-stored parking criterion;
if the road surface meets the pre-stored parking criterion, detecting whether a height corresponding to the parking space meets a standard height;
if the height meets the standard height, generating a route from a current position of the vehicle to the parking space, and determining whether the route is feasible; and
if the route is feasible, determining the parking space as the usable parking space.

With this implementation, it is possible to detect whether the identified parking space meets a parking criterion of the current vehicle with respect to No Parking sign, the road surface and height of the parking space, the route from the current position of the vehicle to the parking space and the like. The parking space among the identified parking spaces that meets the parking criterion of the current vehicle can be determined as the usable parking space, so as to ensure that the identified usable parking space can be used for parking the current vehicle.

A storage unit 403 is configured to obtain usable parking position information of the usable parking space determined by the first identifying unit 402 and store the usable parking position information, so as to avoid repeated detection of the usable parking space.

As an optional implementation, the storage unit 403 can obtain the usable parking position information of the usable parking space and store the usable parking position information by:
detecting whether an electronic map is pre-stored;
if so, calculating a group of position coordinates of the usable parking space in the electronic map, and storing the group of position coordinates as the usable parking position information of the usable parking space, so as to avoid repeated detection of the usable parking space; or
otherwise, obtaining a group of latitude and longitude coordinates of the usable parking space, and storing the group of latitude and longitude coordinates as the usable parking position information of the usable parking space, so as to avoid repeated detection of the usable parking space.

With this implementation, if the parking space detection apparatus does not have a pre-stored electronic map, a group of longitude and latitude coordinates of the usable parking space can be determined by using a Satellite Positioning technology, so as to determine the exact position information of the usable parking space. In addition, a variety of storage schemes for storing the usable parking position information of the usable parking space can be provided, so as to ensure that the parking space detection apparatus can accurately store the detected usable parking space.

It can be seen that, with the parking space detection apparatus as described in FIG. 4, there is no need to repeatedly detect a missed usable parking space in which the vehicle was to be parked, which saves the time required for identifying the usable parking space and improves the efficiency of automatic parking. In addition, with the parking space detection apparatus as described in FIG. 4, the obtained parking space can be a standard parking space, so as to ensure that the obtained parking space can be used for parking the vehicle. In addition, with the parking space detection apparatus as described in FIG. 4, the parking space among the identified parking spaces that meets the parking criterion of the current vehicle can be determined as the usable parking space, so as to ensure that the identified usable parking space can be used for parking the current vehicle. In addition, with the parking space detection apparatus as described in FIG. 4, a variety of storage schemes for storing the usable parking position information of the usable parking space can be provided, so as to ensure that the parking space detection apparatus can accurately store the detected usable parking space.

### Embodiment 5

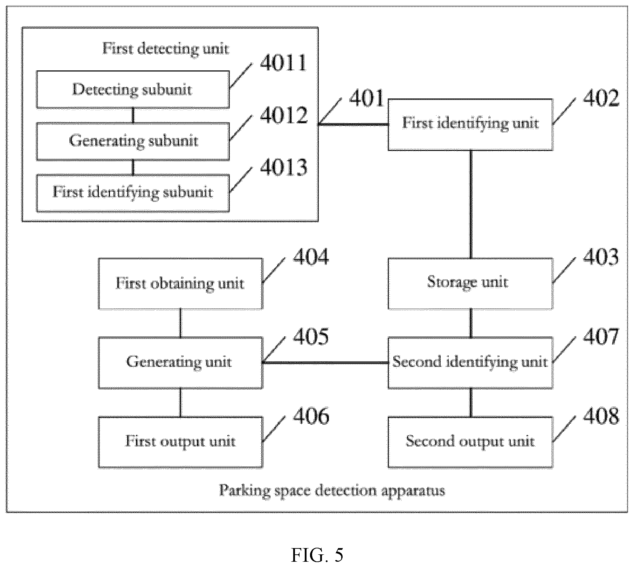

Reference is now made to FIG. 5, which is a schematic diagram showing a structure of another parking space detection apparatus according to an embodiment of the present disclosure. Here, the parking space detection apparatus shown in FIG. 5 is obtained by optimizing the parking space detection apparatus shown in FIG. 4. Compared with the parking space detection apparatus shown in FIG. 4, the parking space detection apparatus shown in FIG. 5 may further include:
a first obtaining unit 404 configured to obtain current images of the environment in which the vehicle is located using an image capturing device;
a generating unit 405 configured to combine the current images obtained by the first obtaining unit 404 using an augmented reality technology to generate a current scene image of the environment in which the vehicle is located; and
a first output unit 406 configured to output the current scene image via a display device.

In an embodiment of the present disclosure, the environment image around the vehicle can be captured by the image capturing device, and the captured environment images can be combined to generate a comprehensive current scene image. The current scene image can be outputted via the display device, such that the driver and passengers can have a clear understanding of the environment in which the vehicle is currently located.

As an optional implementation, the parking space detection apparatus shown in FIG. 5 may further include:
a second identifying unit 407 configured to identify a first position of the reachable region in the current scene image generated by the generating unit 405, and obtain a second position corresponding to the usable parking position information in the current scene image, after the storage unit 403 obtains the usable parking position information of the usable parking space and stores the usable parking position information; and
a second output unit 408 configured to output a first reachable region image at the first position in the current scene image as identified by the second identifying unit 407, and output a parking space image at the second position in the current scene image, as identified by the second identifying unit 407, via the display device.

With this implementation, the detected reachable region and the simulated image of the parking space can be outputted into the current scene image, such that the driver and passengers can clearly identify the specific position of the detected parking space and the surrounding environment of the parking space. In this way, the driver and passengers can select the parking space to park based on the parking spaces and the surrounding environment of the parking spaces comprehensively.

As an optional implementation, the first detecting unit 401 of the parking space detection apparatus shown in FIG. 5 may include:
a detecting subunit 4011 configured to obtain, in response to detecting a parking instruction, an occupied area of the vehicle, and detect position information of one or more obstacles in the environment in which the vehicle is located;
a generating subunit 4012 configured to generate a target region based on the position information of the one or more obstacles as detected by the detecting subunit 4011; and
a first identifying subunit 4013 configured to identify, from the target region generated by the generating subunit 4012, the reachable region with an area larger than the occupied area obtained by the detecting subunit 4011.

With this implementation, a region having an area larger than the area occupied by the current vehicle can be determined as the reachable region of the vehicle, and regions with areas smaller than the area occupied by the current vehicle can be excluded, so as to ensure that the detected reachable region can meet the parking requirement of the vehicle.

It can be seen that, with the parking space detection apparatus as described in FIG. 5, there is no need to repeatedly detect a missed usable parking space in which the vehicle was to be parked, which saves the time required for identifying the usable parking space and improves the efficiency of automatic parking. In addition, with the parking space detection apparatus as described in FIG. 5, the current scene image can be outputted via the display device, such that the driver and passengers can have a clear understanding of the environment in which the vehicle is currently located. In addition, with the parking space detection apparatus as described in FIG. 5, the driver and passengers can select the parking space to park based on the parking spaces and the surrounding environment of the parking spaces comprehensively. In addition, with the parking space detection apparatus as described in FIG. 5, it can be ensured that the detected reachable region can meet the parking requirement of the vehicle.

### Embodiment 6

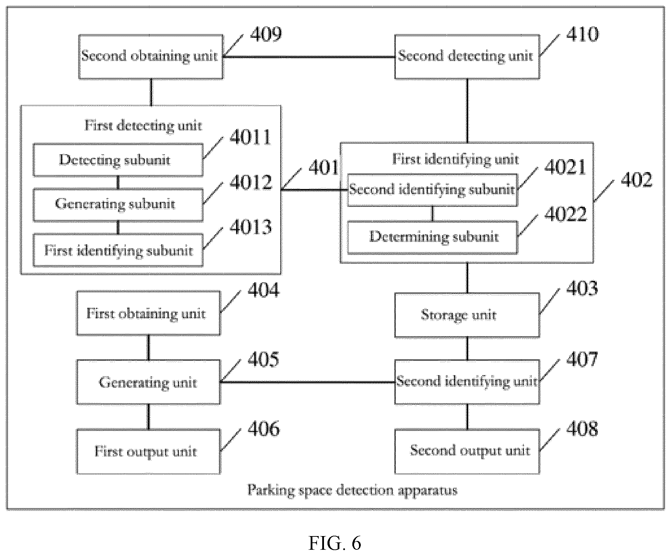

Reference is now made to FIG. 6, which is a schematic diagram showing yet another parking space detection apparatus according to an embodiment of the present disclosure. Here, the parking space detection apparatus shown in FIG. 6 is obtained by optimizing the parking space detection apparatus shown in FIG. 5. Compared with the parking space detection apparatus shown in FIG. 5, the first identifying unit 402 of the parking space detection apparatus shown in FIG. 6 may include the following units.

A second identifying subunit 4021 is configured to identify the one or more parking spaces in the reachable region detected by the first detecting unit 401 and determine an accessible region around each of the one or more parking spaces.

As an optional implementation, the second recognition subunit 4021 can identify the one or more parking spaces in the reachable region and determine the accessible region around each of the one or more parking spaces by:
obtaining a model of the vehicle;
obtaining a length, a width, and a height of the vehicle based on the model of the vehicle;
obtaining a target region corresponding to the length and width of the vehicle from the reachable region, the length of the target region being greater than or equal to the length of the vehicle, and the width of the target region being greater than or equal to the width of the vehicle;
detecting whether a height from a ground in the target region to an obstacle opposite to the ground is greater than the height of the vehicle; and
if so, determining the target region as a parking space, and determining an area around the parking space as an accessible region of the parking space.

With this implementation, it can be ensured that the dimensions of the detected parking spaces match the model of the current vehicle, so as to ensure that the identified parking spaces are suitable for parking the current vehicle, thereby increasing the probability that the vehicle can be parked in the identified parking spaces.

A determining subunit 4022 is configured to determine, from the one or more parking spaces identified by the second identifying subunit 4021, the usable parking space having the accessible region that meets a parking criterion of the vehicle.

In an embodiment of the present disclosure, after obtaining the one or more parking spaces in the reachable region, it is possible to detect the usable parking space having the accessible region around the usable parking space that meets the parking criterion of the vehicle, such that the vehicle can be parked in the usable parking space by moving in the accessible region, thereby ensuring that the vehicle can be parked in the detected usable parking space.

As an optional implementation, the parking space detection apparatus shown in FIG. 6 may further include:
a second obtaining unit 409 configured to obtain a second reachable region image containing the reachable region using an image capturing device, after the first detecting unit 401 detects the reachable region matching the vehicle in the environment in which the vehicle is located; and
a second detecting unit 410 configured to detect whether pre-stored usable parking position information contains a usable parking space image matching the second reachable region image obtained by the second obtaining unit 409 using an image identification technology.

The first identifying unit 402 may be further configured to identify the one or more parking spaces in the reachable region and determine the usable parking space from the one or more parking spaces when the second detecting unit 410 detects that the pre-stored usable parking position information contains no usable parking space image matching the second reachable region image.

With this implementation, it can be detected whether the currently identified reachable region matches the position of the usable parking space pre-stored in the parking space detection apparatus. If so, it can be considered that the parking space detection apparatus has stored the information on the usable parking space in the reachable region. Therefore, the parking space detection apparatus does not need to detect the information on the usable parking space again, which simplifies the process of parking space detection and improves the efficiency of parking space detection.

It can be seen that, with the parking space detection apparatus as described in FIG. 6, there is no need to repeatedly detect a missed usable parking space in which the vehicle was to be parked, which saves the time required for identifying the usable parking space and improves the efficiency of automatic parking. In addition, with the parking space detection apparatus as described in FIG. 6, it can be ensured that the identified parking spaces are suitable for parking the current vehicle, thereby increasing the probability that the vehicle can be parked in the identified parking spaces. In addition, with the parking space detection apparatus as described in FIG. 6, the vehicle can be parked in the usable parking space by moving in the accessible region, thereby ensuring that the vehicle can be parked in the detected usable parking space. In addition, with the parking space detection apparatus as described in FIG. 6, there is no need to detect the information on the usable parking space again, which simplifies the process of parking space detection and improves the efficiency of parking space detection.

### Embodiment 7

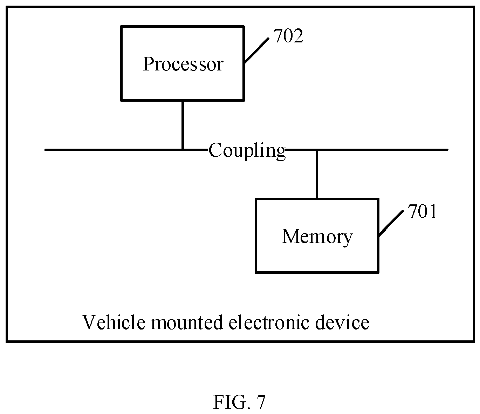

Reference is now made to FIG. 7, which is a schematic diagram showing a structure of a vehicle mounted electronic device according to an embodiment of the present disclosure. As shown in FIG. 7, the vehicle mounted electronic device may include:
a memory 701 storing executable program codes; and
a processor 702 coupled to the memory 701.

The processor 702 is configured to invoke the executable program codes stored in the memory 701 to perform a part or all of the steps in the method according to any of the above method embodiments.

A computer readable storage medium is also provided according to an embodiment of the present disclosure. The computer readable storage medium stores program codes including instructions for performing a part or all of the steps in the method according to any of the above method embodiments.

A computer program product is also provided according to an embodiment of the present disclosure. The computer program product, when executed on a computer, causes the computer to perform a part or all of the steps in the method according to any of the above method embodiments.

An application publishing platform is also provided according to an embodiment of the present disclosure. The application publishing platform is configured to publish a computer program product which, when executed on a computer, causes the computer to perform a part or all of the steps in the method according to any of the above method embodiments.

It can be appreciated that "an embodiment of the present disclosure" as mentioned throughout the specification means that a specific feature, structure, or characteristic related to the embodiment is included in at least one embodiment of the present disclosure. Therefore, the references to "in an embodiment of the present disclosure" throughout the specification do not necessarily refer to the same embodiment. In addition, these specific features, structures or characteristics can be combined in one or more embodiments as appropriate. It can be appreciated by those skilled in the art that the embodiments described in the specification are all optional embodiments, and the actions and modules involved in these embodiments are not necessarily required by the present disclosure.

It can be appreciated that, in various embodiments of the present disclosure, the values of the sequence numbers of the respective processes above do not mean a necessary order in which the processes are performed. The order in which the processes are performed depends on their functions and internal logics. The implementation of the embodiments of the present disclosure is not limited to any exemplary order.

In addition, the terms "system" and "network" are often used interchangeably herein. It can be appreciated that the term "and/or" as used herein is only an association relationship for describing associated objects, including three possible relationships, e.g., A and/or B may mean A only, B only, or both A and B. The symbol "/" as used herein generally indicates that the associated objects in front of and behind it are in an "or" relationship.

## Claims

1. A parking space detection method, comprising:
detecting a reachable region matching a vehicle in an environment in which the vehicle is located;
identifying one or more parking spaces in the reachable region, and determining a usable parking space from the one or more parking spaces; and
obtaining usable parking position information of the usable parking space, and storing the usable parking position information.

2. The method according to claim 1, further comprising:
obtaining current images of the environment in which the vehicle is located using an image capturing device;
combining the current images using an augmented reality technology to generate a current scene image of the environment in which the vehicle is located; and
outputting the current scene image via a display device,
wherein the method further comprises, subsequent to obtaining the usable parking position information of the usable parking space and storing the usable parking position information:
identifying a first position of the reachable region in the current scene image, and obtaining a second position corresponding to the usable parking position information in the current scene image; and
outputting a first reachable region image at the first position in the current scene image, and outputting a parking space image at the second position in the current scene image, via the display device.

3. The method according to claim 1 or 2, wherein said detecting the reachable region matching the vehicle in the environment in which the vehicle is located comprises:
obtaining, in response to detecting a parking instruction, an occupied area of the vehicle, and detecting position information of one or more obstacles in the environment in which the vehicle is located;
generating a target region based on the position information of the one or more obstacles; and
identifying, from the target region, the reachable region with an area larger than the occupied area.

4. The method according to claim 3, wherein said identifying the one or more parking spaces in the reachable region and determining the usable parking space from the one or more parking spaces comprise:
identifying the one or more parking spaces in the reachable region, and determining an accessible region around each of the one or more parking spaces; and
determining, from the one or more parking spaces, the usable parking space having the accessible region that meets a parking criterion of the vehicle.

5. The method according to claim 1, further comprising, subsequent to detecting the reachable region matching the vehicle in the environment in which the vehicle is located:
obtaining a second reachable region image containing the reachable region using an image capturing device;
detecting whether pre-stored usable parking position information contains a usable parking space image matching the second reachable region image using an image identification technology; and
if not, performing said identifying of the one or more parking spaces in the reachable region and said determining of the usable parking space from the one or more parking spaces.

6. A parking space detection apparatus, comprising:
a first detecting unit configured to detect a reachable region matching a vehicle in an environment in which the vehicle is located;
a first identifying unit configured to identify one or more parking spaces in the reachable region and determine a usable parking space from the one or more parking spaces; and
a storage unit configured to obtain usable parking position information of the usable parking space and store the usable parking position information.

7. The parking space detection apparatus according to claim 6, further comprising:
a first obtaining unit configured to obtain current images of the environment in which the vehicle is located using an image capturing device;
a generating unit configured to combine the current images using an augmented reality technology to generate a current scene image of the environment in which the vehicle is located; and
a first output unit configured to output the current scene image via a display device,
wherein the apparatus further comprises:
a second identifying unit configured to identify a first position of the reachable region in the current scene image, and obtain a second position corresponding to the usable parking position information in the current scene image, after the storage unit obtains the usable parking position information of the usable parking space and stores the usable parking position information; and
a second output unit configured to output a first reachable region image at the first position in the current scene image, and output a parking space image at the second position in the current scene image, via the display device.

8. The parking space detection apparatus according to claim 6 or 7, wherein the first detecting unit comprises:
a detecting subunit configured to obtain, in response to detecting a parking instruction, an occupied area of the vehicle, and detect position information of one or more obstacles in the environment in which the vehicle is located;
a generating subunit configured to generate a target region based on the position information of the one or more obstacles; and
a first identifying subunit configured to identify, from the target region, the reachable region with an area larger than the occupied area.

9. The parking space detection apparatus according to claim 8, wherein the first identifying unit comprises:
a second identifying subunit configured to identify the one or more parking spaces in the reachable region and determine an accessible region around each of the one or more parking spaces; and
a determining subunit configured to determine, from the one or more parking spaces, the usable parking space having the accessible region that meets a parking criterion of the vehicle.

10. The parking space detection apparatus according to claim 6, further comprising:
a second obtaining unit configured to obtain a second reachable region image containing the reachable region using an image capturing device, after the first detecting unit detects the reachable region matching the vehicle in the environment in which the vehicle is located; and
a second detecting unit configured to detect whether pre-stored usable parking position information contains a usable parking space image matching the second reachable region image using an image identification technology,
wherein the first identifying unit is further configured to identify the one or more parking spaces in the reachable region and determine the usable parking space from the one or more parking spaces when the second detecting unit detects that the pre-stored usable parking position information contains no usable parking space image matching the second reachable region image.

11. A computer readable storage medium, storing a computer program that enables a computer to execute the parking space detection method according to any of claims 1 to 5.
